# FASCICULE DE BREVET EUROPEEN

(11) **EP 2 572 772 B1**
(45) Date de publication et mention de la délivrance du brevet: **19.03.2014**
(21) Numéro de dépôt: 12290288.5
(22) Date de dépôt: 31.08.2012
(51) Int. Cl.: B01D 53/14, B01D 53/34, B01D 53/62

(54) **Procédé de captage de dioxyde de carbone, avec section de lavage acide optimisée**
Kohlenstoffdioxid-Abtrennverfahren mit optimiertem, saurem Waschbereich
Method for capture of carbon dioxide with optimised acid washing section

(30) Priorité: 22.09.2011 FR 1102883
(43) Date de publication de la demande: 27.03.2013
(73) Titulaire: IFP Energies Nouvelles, 92852 Rueil Malmaison Cedex (FR)
(72) Inventeur: LeMaire, Eric, 69480 Anse (FR)

(56) Documents cités:
- EP-A1- 2 228 119
- WO-A1-2010/102877
- WO-A1-2011/087972
- US-A1- 2003 045 756

## Description

La présente invention concerne le domaine de la décarbonatation des fumées de combustion.

Afin de limiter le phénomène de réchauffement climatique, le dioxyde de carbone (CO₂) est extrait des fumées de combustion en vue d'être séquestré dans un réservoir souterrain.

On utilise couramment des procédés d'absorption mettant en oeuvre une solution aqueuse d'amine pour retirer le CO₂ d'un gaz. Le gaz est purifié par mise en contact avec la solution absorbante, puis la solution absorbante est régénérée thermiquement.

Une des limitations des procédés d'absorption mettant en oeuvre une solution aqueuse d'amine, est la formation de produits de dégradation ou de réaction secondaire tel que l'ammoniac (NH₃), certains alcools, des cétones, des acides organiques. Les produits de dégradation acides (acide formique, acide acétique, ...) réagissent irréversiblement avec l'amine pour former des sels non régénérables ("Heat Stable Salts"). Ces produits acides sont donc piégés dans la phase liquide sous forme de sels, et périodiquement éliminés par des opérations de purification du solvant (par exemple par distillation ou "reclaiming"). En revanche, les produits de dégradation basiques ou aprotique ne réagissent pas avec l'amine. Ils se partagent donc entre la phase liquide et la phase gaz. Ces derniers sont généralement présents en faible quantité, mais peuvent avoir une tension de vapeur élevée. Des quantités non nulles de ces produits de dégradation s'échappent donc dans les fumées décarbonatées.

Le problème des produits de dégradation entraînés par les fumées décarbonatées peut être résolu en mettant en oeuvre une section de lavage à l'eau en aval de la section de captage du CO₂. On peut citer le document EP 502 596 qui propose un procédé de décarbonatation de fumées de combustion, dans lequel les fumées décarbonatées sont lavées par de l'eau pour retirer les composés réactifs de la solution absorbante, qui ont été entraînés par les fumées. Néanmoins le lavage à l'eau peut être insuffisant pour réduire la teneur en produits de dégradation à des valeurs règlementaires.

En complément du lavage à l'eau, le document WO 2010/102877 propose d'effectuer un second lavage des fumées décarbonatées avec une eau acide pour récupérer les traces de produits de dégradation qui n'auraient pas été retirées lors du premier lavage à l'eau.

Les inventeurs ont montré que le procédé de captage de CO2 avec une section de lavage à l'eau comme décrit dans le document EP 502 596 en conditions opératoires normales est capable de maîtriser les rejets de produits de dégradation dans les fumées au niveau souhaité par la règlementation. Cependant, lors de changement de conditions de fonctionnement du procédé, tel que des arrêts, démarrage, variation brusque de la température ou de la composition des fumées, le système de lavage à l'eau peut être insuffisant pour limiter les rejets à la teneur règlementaire. Bien que ces pics d'émission de produits de dégradation soient temporaires, il est inenvisageable de ne pas respecter les valeurs règlementaires requises. Par ailleurs, il serait non économique de dimensionner la section de lavage à l'eau pour maitriser les pics d'émissions lors de ces phases transitoires.

La présente invention propose de suivre des paramètres de fonctionnement du procédé pour pouvoir anticiper des variations d'émissions des produits de dégradation, notamment l'ammoniac, et de mettre en oeuvre, dans de telles phases de variation, une section de lavage acide du type de celle décrite par le document WO 2010/102877 pour éviter un pic d'émissions de produits de dégradation qui dépasseraient les valeurs règlementaires autorisées.

En outre, dans un mode de réalisation préféré, la présente invention propose de mettre en oeuvre la zone de lavage acide afin de diminuer la teneur en produits de dégradation volatils, notamment l'ammoniac, contenus dans la solution absorbante sans pour autant les émettre à l'atmosphère.

De manière générale, la présente invention concerne un procédé de captage de CO₂ contenu dans les fumées de combustion produites par une unité de combustion selon la revendication 1.

Selon l'invention, lesdits paramètres de fonctionnement peuvent être choisis dans la liste suivante : la teneur en CO₂ dans les fumées de combustion avant l'étape a), la température des fumées de combustion avant l'étape a), le débit des fumées de combustion avant l'étape a), la valeur de la puissance au rebouilleur divisée par le débit de la solution absorbante à l'étape a).

On peut effectuer l'étape d), en outre, en cas de modification de l'alimentation en combustible de l'unité de combustion ou en cas de modification du taux de captage de CO₂ à l'étape a).

On peut effectuer l'étape d) si on détecte une variation d'au moins 2% de ladite valeur en moins d'une heure.

On peut mesurer au cours du temps la teneur en ammoniac contenue dans les fumées appauvries en produits de dégradation de l'amine obtenues à l'étape c) et on peut arrêter d'effectuer l'étape d) lorsque ladite teneur descend en-dessous d'un seuil prédéterminé.

Dans le cas où l'on détecte une variation au cours du temps de ladite valeur, on peut effectuer l'étape d) pendant au moins une période de temps déterminée.

L'acide utilisé à l'étape d) peut être un acide inorganique choisi parmi le HNO₃, le HNO₂, le H₂SO₄, le H₂PO₃ et le H₃PO₄. Alternativement, l'acide utilisé à l'étape d) peut être un acide organique choisi parmi l'acide citrique, l'acide oxalique, l'acide malonique, l'acide succinique, l'acide malique, l'acide tartrique ou l'acide ortho-phtalique.

On peut refroidir et on peut recycler une partie du flux d'eau enrichie en amine et en produits de dégradation de l'amine obtenu en fond de la première section de lavage pour constituer au moins une partie dudit premier flux d'eau liquide mis en oeuvre à l'étape c).

On peut refroidir et on peut recycler une partie du flux d'eau obtenu en fond de la deuxième section de lavage pour constituer au moins une partie dudit flux d'eau liquide mis en oeuvre à l'étape d).

De plus, dans le procédé selon l'invention, on peut effectuer l'étape suivante :
e) on liquéfie partiellement par refroidissement ledit effluent gazeux obtenu à l'étape b) pour obtenir un flux de CO₂ et un condensat, et on met en contact une portion du condensat avec le deuxième flux d'eau.

On peut effectuer l'étape e) pendant une durée déterminée, lorsque ladite valeur est constante.

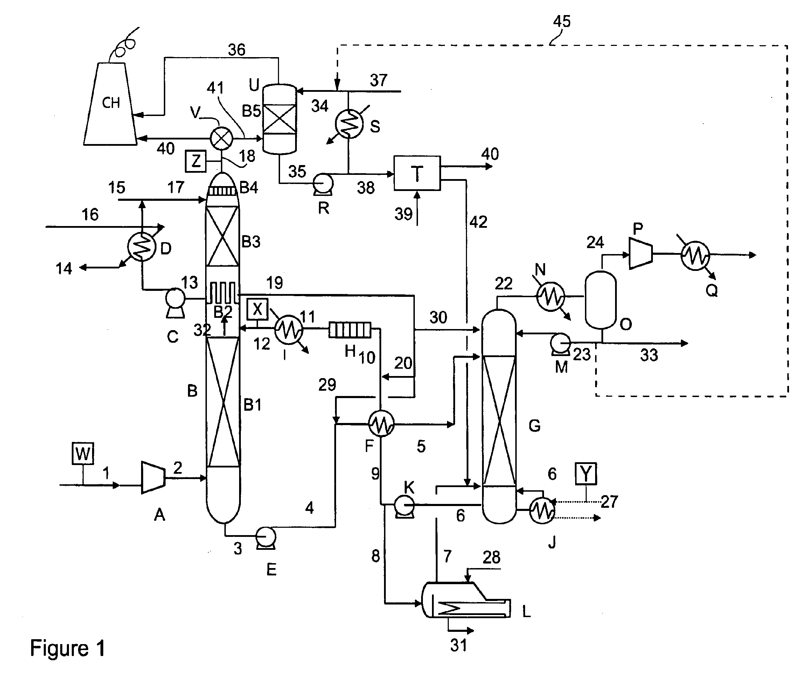

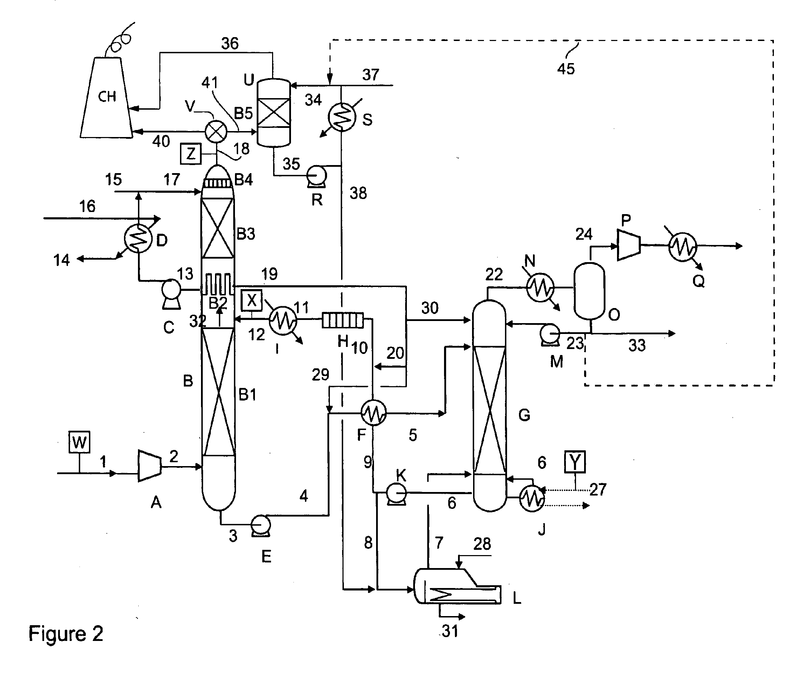

D'autres caractéristiques et avantages de l'invention seront mieux compris et apparaîtront clairement à la lecture de la description faite ci-après en se référant aux dessins parmi lesquels la figure 1 schématise un procédé de captage de CO₂ selon l'invention et la figure 2 schématise une variante du procédé selon l'invention.

En référence à la figure 1, les fumées de combustion à traiter arrivent par le conduit 1 à une pression qui peut être comprise entre 1 et 40 bars absolu, et à une température qui peut être comprise entre 10 °C et 100°C.

Les fumées de combustion peuvent être produites par une centrale thermique pour la production d'électricité. Le procédé de captage selon l'invention peut également être appliqué à toutes les fumées de combustion, produites par exemple dans une raffinerie, dans une cimenterie, dans une installation de sidérurgie, ou une fumée de combustion produite sous forme de gaz de synthèse par oxydation d'un combustible hydrocarboné.

Les fumées de combustion comportent en général entre 5% et 30% volume de CO₂ et entre 1 et 15 % volume d'oxygène. Dans le cas des fumées de combustion, la teneur en composés de type SOx et NOx peut atteindre une valeur de l'ordre de 200 mg/Nm³ volume pour chacun desdits composés.

Les fumées de combustion arrivant par le conduit 1 peuvent être comprimées par l'organe A. Par exemple, l'élément A est une soufflante ou un compresseur assurant une augmentation de pression de l'ordre de 100 à 250 mbar.

Les fumées sont introduites par le conduit 2 dans la section d'absorption B1 munie d'éléments de mise en contact entre gaz et liquide, par exemple des plateaux, un garnissage en vrac ou un garnissage structuré. Dans la section B1, les fumées sont mises en contact avec la solution absorbante arrivant par le conduit 12. Le gaz circule à contre-courant de la solution liquide. La solution absorbante capte le CO₂ contenu dans les fumées. On évacue par le conduit 3 en fond de la section B1 une solution absorbante chargée en CO₂. On obtient des fumées appauvries en CO₂ en tête de la section B1, ce flux étant représenté par la flèche 32.

La composition de la solution absorbante comporte des amines en phase aqueuse. Les amines sont choisies pour leur capacité à absorber les composés acides. On peut mettre en oeuvre une solution aqueuse comportant, en général entre 10% et 80% poids, de préférence entre 20% et 60% poids, en amines. La solution aqueuse peut comporter entre 20% et 90% poids, de préférence entre 40% et 80% poids d'eau. La solution absorbante peut par ailleurs contenir un solvant organique, non réactif vis à vis des gaz acides, mais qui permet d'augmenter la solubilité physique d'une impureté, afin d'améliorer son élimination (solvant physique).

On peut choisir les amines parmi des monoamines telles que la MEA (monoéthanolamine), la DEA (diéthanolamine), la MDEA (méthyldiéthanolamine), la DIPA (diisopropylamine), ou la DGA (diglycolamine), mais aussi parmi des multiamines telles que la pipérazine, la N-(2-hydroxyéthyl)piperazine, la N,N,N',N'-Tétraméthylhexane-1,6-diamine, la N,N,N',N'-Tétraéthyldiéthylènetriamine, la 1,2-bis(2-diméthylaminoéthoxy)éthane, la 1,2-bis(2-diéthylaminoéthoxy)éthane, la 1,2-bis(2-pyrolidinoéthoxy)éthane, la 1,2,3,4-Tetrahydroisoquinoline, la 1-butylpipérazine et la 2-méthylpipérazine. Ces amines peuvent être employées seules, ou en mélange.

Les amines peuvent également être mélangées à des solvants à caractère physique, par exemple le méthanol, le sulfolane, les polyéthylèneglycols qui peuvent être éthérifiés, les pyrrolydones ou dérivés comme par exemple la N-méthylpyrrolidone, la N-formyl morpholine, l'acétyl morpholine, le carbonate de propylène. Par exemple, la solution absorbante comporte entre 10% et 50% poids d'un solvant à caractère physique.

La solution absorbante évacuée en fond de la section B1 est pompée par la pompe E, introduite dans l'échangeur de chaleur F par le conduit 4 pour y être chauffée, puis introduite dans la colonne de régénération G par le conduit 5.

En général, on envoie la totalité de la solution absorbante dans la colonne de régénération.

Alternativement, on peut séparer la solution absorbante obtenue après passage au sein de l'échangeur de chaleur F en deux fractions, et n'envoyer qu'une seule fraction dans la colonne de régénération G. Par exemple, on peut séparer la solution absorbante chargée en CO₂ en une fraction riche en CO₂ et une fraction pauvre en CO₂. La fraction riche en CO₂ est envoyée dans la colonne G, la fraction pauvre en CO₂ est recyclée en étant introduite en tête de la section d'absorption B1. Ce mode de réalisation est détaillé par le document FR 2 898 284.

La colonne de régénération G est équipée d'internes de séparation gaz/liquide, par exemple des plateaux, des garnissages en vrac ou structurés. Le fond de la colonne G est équipé d'un rebouilleur J qui apporte la chaleur nécessaire à la régénération en vaporisant une fraction de la solution absorbante. Le rebouilleur J est alimenté en chaleur par le conduit 27. Dans la colonne G, sous l'effet de la mise en contact de la solution absorbante arrivant par 5 avec la vapeur produite par J, le CO₂ est libéré sous forme gazeuse et évacué en tête de G par le conduit 22.

La solution absorbante régénérée, c'est-à-dire appauvrie en CO₂, est évacuée en fond de la colonne G par le conduit 6, pompée par la pompe K, et introduite par le conduit 9 dans l'échangeur F pour être refroidie. La solution absorbante refroidie est évacuée par le conduit 10 pour être introduite dans le filtre H afin d'en retirer les particules et composés solides. La solution absorbante évacuée de H par le conduit 11 est refroidie dans l'échangeur de chaleur I puis introduite par le conduit 12 dans la section B1.

Le flux gazeux évacué en tête de G par le conduit 22 est partiellement liquéfié par refroidissement dans l'échangeur N puis introduit dans le séparateur O. Les condensats sont tout ou en partie recyclés par le conduit 23 et la pompe M en tête de la colonne G à titre de reflux. Les éventuels condensats restants sont évacués du procédé par le flux 33.

Le gaz riche en CO₂ évacué en tête du ballon O par le conduit 24 est liquéfié, en vue d'être injecté dans un réservoir souterrain. Le flux riche en CO₂ peut être comprimé et déshydraté dans les organes P et Q pour obtenir un flux de CO₂ liquide à 110 bars environ et d'une très grande pureté, par exemple supérieure à 99% volume de CO₂.

Une partie de la solution absorbante régénérée obtenue en fond de G peut être introduite par le conduit 8 dans l'appareil de vaporisation L, couramment nommé "reclaimer". Dans l'appareil L, la solution absorbante est chauffée jusqu'à être vaporisée. Les vapeurs, constituées d'eau et d'amine, sont évacuées de L par le conduit 7 pour être introduites dans la colonne G. Les sels formés par la dégradation de composés réactifs restent à l'état solide en suspension dans un liquide au fond de L et sont extraits cycliquement et évacués par le conduit 31. La température d'ébullition de l'amine est généralement supérieure à celle de l'eau. La vaporisation de l'amine à pression de l'ordre de 1 à 2 bars, nécessite d'être à des températures élevées, ce qui peut causer de nouvelles dégradations irréversibles de l'amine. Pour palier à ce problème, l'opération de distillation peut être réalisée sous vide, mais il est alors nécessaire de recomprimer les vapeurs évacuées de L par le conduit 7 avant d'être introduites dans la colonne G, ce qui entraîne des coûts additionnels. Alternativement, on peut ajouter de l'eau par le conduit 28 dans le "reclaimer" L pour réguler la température de vaporisation. Moins l'amine est volatile, plus les quantités d'eau à ajouter pour réguler la température de vaporisation sont importantes. De plus, on peut éventuellement ajouter une base forte dans la solution absorbante circulant dans le conduit 8, par exemple une solution d'hydroxyde de sodium, pour libérer l'amine piégé par réaction avec des acides forts. Ces derniers se retrouvent sous forme de sels de sodium, et l'amine sous forme neutre est vaporisable.

Le gaz purifié 32 entraîne une quantité non nulle de composés organiques comportant notamment de l'amine et des éventuels produits de dégradation de l'amine. En effet, en tête de la zone B1, la solution absorbante liquide à forte concentration en amine, par exemple 30% poids dans le cas d'une solution aqueuse de MonoEthanolAmine, se trouve à contre courant d'un gaz circulant à une vitesse importante. Il résulte de ce contact un fort entraînement d'amine et de produits de dégradation de l'amine par le gaz.

On mettre en oeuvre une section de lavage spécifique pour éviter des rejets de produits de dégradation et d'amines : on effectue un lavage à l'eau du gaz pour récupérer les molécules organiques présentes dans les fumées appauvries en CO₂. Le gaz 32 est introduit dans la section de lavage B3 pour être mis en contact, à contre-courant, avec l'eau arrivant par le conduit 17. La section B3 comporte des éléments de mise en contact entre gaz et liquide, par exemple des plateaux, un garnissage en vrac ou un garnissage structuré. Les fumées purifiées et appauvries en composés organiques sont évacuées de B3 par le conduit 18. L'eau chargée en composés organiques est récupérée en fond de la section de lavage B3.

Une partie de l'eau de lavage récupérée en fond de B3 est soutirée par le conduit 13, pompée par la pompe C, refroidie par l'échangeur de chaleur D avant d'être introduite en tête de la section B3 par le conduit 17. Dans l'échangeur D, l'eau de lavage est refroidie par un fluide frigorigène arrivant par le conduit 16 et évacué par le conduit 14.

Éventuellement, on peut effectuer une alimentation en eau fraîche par le conduit 15. Ladite eau est mélangée à l'eau de lavage circulant dans la boucle, puis l'eau est introduite par le conduit 17 dans la section de lavage B3.

En référence à la figure 1, une portion de l'eau de lavage saturée peut être prélevée par le conduit 19 pour être introduite à différents endroits dans le procédé.

L'eau de lavage saturée peut être introduite par le conduit 20 dans le conduit 10 pour être mélangée avec la solution absorbante régénérée obtenue en fond de G. De préférence, on mélange l'eau avec la solution absorbante régénérée qui a été refroidie après passage à travers l'échangeur F.

L'eau de lavage saturée peut être introduite par le conduit 29 dans le conduit 4 pour être mélangée avec la solution absorbante chargée en composés acides en fond de B1. De préférence, on mélange l'eau avec la solution absorbante chargée en composés acides, en amont de l'échangeur de chaleur F.

On peut également introduire l'eau de lavage saturée prélevée par le conduit 19 dans la colonne de régénération G par le conduit 30.

Lors du fonctionnement normal du procédé, le lavage à l'eau dans la section B3 permet de réduire les entraînements de produits de dégradation de l'amine, notamment l'ammoniac, en dessous des niveaux imposés par la règlementation. Dans ce cas, les fumées purifiées 18 sont envoyées par la vanne V et le conduit 40 à la cheminée CH pour être relâchées dans l'atmosphère.

Par contre lors de changement de conditions de fonctionnement du procédé, tel qu'un arrêt, un démarrage, une variation brusque de la température ou de la composition des fumées, un changement de la consigne du taux de captage l'entraînement de produit de réaction secondaire et de produits de dégradation de l'amine, notamment l'ammoniac, dans les fumées purifiées 18 obtenues en sortie de la section de lavage B3 peut augmenter au dessus des niveaux imposés par la règlementation. Dans ce cas, selon l'invention au moins une partie des fumées purifiées 18 sont envoyées par la vanne V et le conduit 41 dans l'unité lavage supplémentaire U pour capter les produits de dégradation en excès et éviter d'éventuels pics d'émission de ces produits. Le restant des fumées purifiées 18 est envoyé directement par le conduit 40 dans la cheminée CH. La vanne trois voies V permet de répartir le flux 18 entre le conduit 40 et le conduit 41.

Selon l'invention, on anticipe l'augmentation de la teneur en produits de dégradation de l'amine dans les fumées purifiées 18 en mesurant au moins un paramètre de fonctionnement du procédé de captage de CO₂. Par exemple, on peut mesurer au moins l'un des paramètres suivants :
- la teneur en CO₂ dans les fumées à traiter 1,
- la température des fumées à traiter 1,
- le débit des fumées à traiter 1,
- le débit de solution absorbante régénérée 12 qui est introduit dans la section B1,
- la valeur de la puissance du rebouilleur J ramené au débit de solution absorbante 12, c'est-à-dire la valeur de la puissance du rebouilleur J divisée par le débit de solution absorbante 12. Ce paramètre peut être exprimé en J/m³.

Les valeurs de ces paramètres peuvent être mesurés par les capteurs W disposés sur le conduit 1, les capteurs X disposés sur le conduit 12 et les capteurs Y disposés sur le conduit 27. Sans sortir du cadre de la présente invention, on peut mesurer d'autres paramètres de fonctionnement du procédé. Lorsque la valeur d'au moins un de ces paramètres subit une variation sensible et dans un sens défini (croissant ou décroissant selon les paramètres) dans le temps, on envoie la fumée décarbonatée 18 dans l'unité de lavage supplémentaire U. Par exemple, les fumées 18 sont dirigées dans l'unité de lavage U lorsque la valeur du paramètre varie d'au moins 2%, de préférence au moins 4%, voire d'au moins 6% dans un intervalle de temps inférieur à 1 heure, de préférence dans un intervalle de temps inférieur à ½ heure, et de manière encore plus préféré dans un intervalle de temps inférieur à % heure.

Avant d'être pleinement opérationnel, le procédé selon l'invention peut comporter une phase d'apprentissage pour pouvoir définir au mieux les bornes utilisées pour la régulation. Le sens (augmentation ou diminution), les seuils de variation (en pourcentage) et l'intervalle de temps de la variation peuvent être déterminés au préalable en effectuant des tests ou en observant le comportement du procédé de captage de CO₂ lorsque les paramètres évoluent. Par exemple, on effectue un test en augmentant ou en diminuant la valeur d'un des paramètres dans un intervalle de temps donné. Pendant le test on mesure la teneur en ammoniac des fumées 18. On détermine le seuil de variation, c'est à dire la différence entre la valeur initiale et la valeur atteinte, associé à l'intervalle de temps pendant lequel a eu lieu la variation, qui produisent une augmentation de la teneur en ammoniac dans les fumées au-dessus de la valeur règlementaire, par exemple plus de 10 ppm volumique d'ammoniac. Selon l'invention, on utilise les seuils de variation associés aux intervalles de temps ainsi déterminés pour décider si on active ou non l'unité de lavage acide U.

De plus selon l'invention, on peut envoyer au moins une partie de la fumée décarbonatée 18 dans l'unité de lavage secondaire U lors de phases transitoires du procédé de captage ou du procédé de combustion produisant la fumée à traiter. Par exemple, les phases transitoires peuvent être :
- un changement de combustion du procédé de combustion. C'est notamment le cas lors du démarrage d'une centrale électrique au charbon avec du fuel.
- une variation brusque du procédé de combustion pour répondre à une variation de la demande en électricité du réseau.
- une modification du taux de captage du procédé de captage de CO₂.
- la nécessité de diminuer la teneur en ammoniac dans la solution absorbante.

La présente invention n'est pas limitée au type de paramètres ni au type de phases transitoires qui peuvent déclencher la mise en oeuvre de l'unité de lavage supplémentaire U pour limiter les émissions de produits de dégradation.

Selon l'invention, on peut prévoir, lorsque l'unité de lavage U est mise en fonctionnement, qu'elle fonctionne pendant une durée minimale, par exemple d'au moins ¼ heure, de préférence au moins ½ heure, voire au moins 1 heure. Cette durée peut être déterminée par l'utilisateur, en fonction de sa connaissance du procédé ou en effectuant des essais préalables à la mise en oeuvre du procédé selon l'invention.

Lorsque le procédé de captage revient à un fonctionnement stable, on peut arrêter l'utilisation de la section de lavage supplémentaire U et rediriger les fumées purifiées 18 directement dans la cheminée CH par le conduit 40.

La section de lavage supplémentaire U peut être arrêtée dès lors que la mesure de la teneur en produit de dégradation, en particulier l'ammoniac, est descendue à une valeur inférieure à une valeur seuil dans le flux 18. La teneur en produit de dégradation peut être mesurée par des appareils Z analytiques de mesures en ligne disposés sur le conduit 18. Le suivi de la teneur en ammoniac dans les fumées décarbonatées 18 est approprié car sa mesure est simple et fiable, il fait partie des polluants les plus émis lors de ces phases et pour lequel la spécification est la plus forte. La valeur seuil peut être la valeur autorisée par la législation pour les fumées décarbonatées relâchées dans l'environnement.

L'unité de lavage supplémentaire comporte une colonne de lavage secondaire munie d'une section de mise en contact entre gaz et liquide notée B5, par exemple des plateaux, un garnissage en vrac ou un garnissage structuré. La section B5 permet de capter les produits de dégradation de l'amine, notamment l'ammoniac et principalement les composés basiques. Dans la section B5, les fumées sont mises en contact avec une eau acidifiée arrivant par le conduit 34. Les fumées débarrassées des produits de dégradation sont évacuées de B5 par le conduit 36 pour être introduites dans la cheminée CH pour être libérées dans l'atmosphère. L'eau de lavage acide chargée en composés basiques est récupérée en fond de la section de lavage B5. L'eau de lavage acide récupérée en fond de B5 est soutirée par le conduit 35, pompée par la pompe R, refroidie par l'échangeur de chaleur S, avant d'être introduite en tête de la section B5 par le conduit 34. Éventuellement, on peut effectuer une alimentation en eau acidifiée par le conduit 37. Ladite eau acidifiée est mélangée à l'eau de lavage acide circulant dans la boucle, puis l'eau est introduite par le conduit 34 dans la section de lavage B5.

La solution aqueuse acide utilisée dans ladite section de lavage U a de préférence un pH compris entre 1 et 6, de manière préférée compris entre 4 et 6. L'acide utilisé pour diminuer le pH de la solution aqueuse est choisi de manière à réagir de manière totale avec les composés basiques, garantissant l'élimination totale des composés basiques, même à l'état de trace.

La capacité à éliminer totalement les composés basiques dans la section de lavage U peut permettre de n'envoyer qu'une portion du gaz 18 dans la section U par le 41, le reste allant directement à la cheminée CH par le conduit 40. La répartition du flux 18 entre le conduit 40 et le conduit 41 est réalisée par la vanne V. La vanne V permet d'envoyer de 0 à 100% du flux 18 dans le conduit 40, le restant étant envoyé dans le conduit 41. Cette répartition peut être effectuée de manière à ce que le mélange des flux 40 et 41 respecte la norme sur les rejets atmosphériques. Ainsi, on peut limiter la taille du ballon U et de limiter la consommation d'acide lors de la mise en oeuvre de la section de lavage U.

Étant donné que les amines utilisées pour le captage du CO₂ ont généralement des pKa compris entre 8 et 10, on choisit l'acide de manière à ce que son pKa soit inférieur à 6, de préférence inférieur à 5, voire inférieur à 4, à 25°C en dilution infini dans l'eau. Ainsi, la réaction entre l'acide et les composés basiques volatils est totale. A titre d'illustration, l'acide carbonique H₂CO₃ obtenu par hydratation du CO₂, ne répond pas au critère énoncé, car son pKa est de 6,3.

L'acide utilisé pour diminuer le pH de la solution aqueuse est de préférence un acide fort inorganique. A titre d'illustration, on peut utiliser HNO₃ (pKa = -1), HNO₂ (pKa = 3,3), H₂SO₄ (pKa = -3 et 1,9), H₂PO₃ (pKa = 2) ou H₃PO₄ (pKa = 2,1). De manière préférée, on utilisera HNO₃. De manière alternative, on peut envisager de diminuer le pH de la solution aqueuse en utilisant des acides organiques non volatils, comme par exemple l'acide citrique (pKa = 3,13 et 4,76), l'acide oxalique (pKa = 1,25 et 4,27), l'acide malonique (pKa = 2,85 et 5,7), l'acide succinique (pKa = 4,21 et 5,64), l'acide malique (pKa = 3,46 et 5,10), l'acide tartrique (pKa = 3,04 et 4,37) ou l'acide ortho-phtalique (pKa = 2,95 et 5,41). Le caractère inorganique de l'acide garantit généralement une meilleur stabilité vis à vis de réactions de dégradation. Le caractère d'acide fort permet d'une part de garantir que l'acide est totalement dissocié dans l'eau, empêchant ainsi l'acide de se retrouver dans le gaz traité, et d'autre part de garantir une meilleure élimination des composés organiques basiques.

En effet, les composés organiques basiques (notés B de manière générique) présents dans la phase vapeur vont être absorbés par réaction avec l'acide HNO₃, par exemple, selon la réaction suivante :

*B* + *HNO*₃ → *BH*⁺ + *NO*⁻₃

Les composés organiques basiques sont alors piégés en solution aqueuse sous forme de sel, et ne sont donc plus volatils, et donc ne se retrouvent pas dans le flux 36.

Cette réaction est d'autant plus favorable que le composé organique est basique, et que l'acide utilisé est fort. Cette réaction aura lieu jusqu'à consommation totale de l'acide. La solution aqueuse acide est de préférence régénérée, soit de manière séquentielle, soit de manière continue, en soutirant une partie de la solution aqueuse acide saturée, et en introduisant une solution aqueuse acide non saturée.

Périodiquement, une fraction d'eau acide chargée en composés basiques est soutirée de la boucle par le conduit 38 afin de garantir la capacité de réaction de l'eau acide avec les traces de composés basiques dans la section B5.

La fraction d'eau de lavage acide chargée en composés basiques est traitée dans l'équipement T qui peut mettre en oeuvre une opération thermique, une opération d'échange d'ions, une opération de dialyse, une opération d'électrolyse. Différents cas de figures peuvent être rencontrés selon la nature du composé réactif, la nature du gaz acide à traiter, les opérations unitaires disponibles sur l'unité de désacidification.

Dans le cas des composés basiques volatils, on peut distiller la solution aqueuse acide saturée. Par exemple, on peut effectuer une opération séquentielle de prélèvement d'une portion de l'eau acide de la section de lavage acide par le conduit 38 et effectuer une distillation de la portion prélevée dans l'équipement T. En effet, par le biais de la distillation, on va évaporer l'eau et ainsi augmenter la concentration des sels jusqu'à la limite de précipitation. Le sel en suspension obtenu en fond de ballon de distillation peut ensuite être éliminé par le conduit 40 en étant envoyé à l'unité de traitement des eaux, l'eau purifiée étant réinjectée par le conduit 42 dans la colonne G, par exemple en le mélangeant au flux circulant dans le conduit 7.

Dans le cas de la réinjection des composés organiques basiques (noté B) dans le procédé, on peut tout d'abord ajouter une base forte par le flux 39 comme de la soude NaOH ou la potasse KOH jusqu'à neutralisation totale de l'acide (noté HX) selon la réaction suivante :

*BH*⁺ + *X*⁻ + *Na*⁺ + *HO*⁻ → *B* + *H*₂*O* + *Na*⁺ + *X*⁻

Cette étape permet de libérer les composés organiques basiques qui sont valorisables sous forme neutre, et donc volatile.

Dans une deuxième étape, on peut réaliser une étape de purification par distillation dans l'équipement T. Les composés organiques basiques valorisables, qui sont volatils sous forme neutre, vont être vaporisés et réinjectés au sein de l'unité de désacidification par le flux 42 tandis que les produits lourds seront évacués par le conduit 40.

De plus, selon l'invention, on peut diminuer la teneur en composés de dégradation volatils, notamment en ammoniac, dans la solution absorbante en prélevant une partie du liquide 23 par le conduit 45 pour l'envoyer et le mélanger avec le flux 34 et l'introduire dans l'équipement U. De préférence, on effectue ce recycle de manière temporaire, par exemple pendant une durée déterminée, par exemple inférieure à 2 heures, de préférence pendant une durée inférieure à 1 heure, voire inférieure à ½ heure. Cette durée peut être déterminée par l'utilisateur par exemple en fonction de la quantité de composés de dégradation qui doit être éliminée de la solution absorbante. De plus, de préférence, on effectue le recycle lorsque la section U ne reçoit pas de fumée à traiter, c'est-à-dire lorsque les fumées purifiées 18 sont intégralement envoyées par le conduit 40 à la cheminée CH. Ceci permet de libérer les composés de dégradation volatils, notamment l'ammoniac, dans l'équipement U, en réagissant avec l'acide contenu dans le flux 34. Le flux excédentaire ajouté dans l'unité U est renvoyé après traitement dans l'équipement T par le conduit 42 dans la boucle de circulation de la solution absorbante.

Comme représenté sur la figure 1, la section d'absorption B1 et la section de lavage B3 peuvent être disposées dans la même colonne B. Dans ce cas, on peut disposer un plateau B2 étanche au liquide permettant le passage du gaz de la section B1 vers la section B3. Alternativement, la section d'absorption B1 peut être opérée dans une première colonne, et la section de lavage B3 peut être opérée dans une deuxième colonne distincte de la première colonne. La tête de la première colonne étant équipée d'un conduit connecté au fond de la deuxième colonne pour transférer le gaz purifié de la première colonne à la deuxième colonne.

Pour minimiser le diamètre de l'équipement B, on peut travailler avec des vitesses de gaz très fortes, ce qui n'est pas favorable à une bonne séparation entre le liquide introduit dans B3 par 17 et le gaz évacué de B3 par 18. Selon l'invention, pour limiter les pertes de liquide dans le flux évacué par le conduit 18, on peut disposer un moyen B4 de séparation mécanique entre gaz et liquide en tête de la section B3. Par exemple, le moyen B4 peut prendre la forme d'un plateau sec ou d'une hauteur de garnissage non alimentée par du liquide, ou la forme d'un matelas éliminateur de goutte. On peut également disposer un moyen, non représenté, de séparation mécanique entre gaz et liquide en tête de la section B5.

La figure 2 schématise une variante du procédé dans lequel on réalise un couplage entre le traitement de l'eau de lavage acide saturée en amine, et les opérations de "reclaiming". Tous les équipements et numéros de flux identiques à la figure 1 désignent les même équipements. Dans le cas de la réinjection des composés organiques basiques dans le procédé, l'étape de purification de l'eau de lavage acide peut être réalisée dans le même équipement L que l'étape de purification de la solution absorbante. Dans cette configuration, une portion de l'eau de lavage acide est prélevée périodiquement par le conduit 38 et est directement mélangée au soutirage périodique de la solution absorbante en fond de colonne G par le flux 8. Le mélange de ces deux flux est envoyé vers l'étape de purification L. Dans l'appareil L, la solution absorbante est chauffée jusqu'à être vaporisée. Les vapeurs, constituées d'eau et d'amine, sont évacuées de L par le conduit 7 pour être introduites dans la colonne G. Les sels, formés par la dégradation de composés réactifs et l'acide utilisé pour le lavage acide, restent à l'état solide en suspension dans un liquide au fond de L et sont extraits cycliquement et évacués par le conduit 31. De plus, on peut éventuellement ajouter une base forte dans la solution absorbante circulant dans le conduit 8, par exemple une solution d'hydroxyde de sodium ou de potassium, pour libérer l'amine piégé par réaction avec des acides forts. Ces derniers se retrouvent sous forme de sels de sodium ou de potassium, et l'amine sous forme neutre est vaporisable.

L'exemple de fonctionnement présenté ci-après permet d'illustrer le fonctionnement du procédé selon l'invention.

On considère le captage de CO₂ contenu dans des fumées produites par une centrale de production électrique au charbon. Le procédé met en oeuvre une solution absorbante à la MEA 30 % poids dans l'eau pour capter le CO₂. Lorsque la centrale produit en régime permanent, la teneur de CO₂ dans les fumées à traiter est de l'ordre de 14,5 % volumique, le taux de captage est de 90 % du CO₂ contenu dans les fumées à traiter et la teneur en ammoniac dans le flux 18 est inférieure à 10 ppm volumique ce qui répond à la norme.

Cependant, en cours de fonctionnement, une chute de la demande sur le réseau électrique nécessite de baisser la production électrique de la centrale ce qui va engendrer un chute de la teneur en CO₂ dans les fumées à traiter vers une valeur de 10 à 11 %. Cette chute provoque une baisse de la pression partielle en CO₂ au niveau de la section de lavage B3 et donc un dégazage d'ammoniac contenu dans l'eau de lavage 17. L'ammoniac libéré est évacué dans les fumées 18 avant qu'un nouvel équilibre ne s'établisse et permette à nouveau à cette section de lavage B3 de réduire la teneur en ammoniac dans les fumées 18 à une valeur en dessous de la norme.

Typiquement la baisse du CO₂ peut se produire en 2 heures, le dégazage d'ammoniac peut produire un pic de NH₃ jusqu'à 30 ou 40 ppm volumique dans le flux 18 pendant 2 à 4 heures, puis après 5 à 6 heures la valeur redescend sous le seuil imposé par la règlementation de 10 ppm volumique.

Selon l'invention, le capteur W détecte la baisse de la teneur en CO₂ dans les fumées de combustion. En conséquence, on active la section de lavage acide U et on envoie une partie du flux 18 dans la zone de lavage acide U. Par exemple, la répartition peut être de ¼ du flux 18 vers 40 et ¾ vers 41 afin que le mélange du flux 40 et 41 relâché par la cheminée CH présente une teneur en NH₃ inférieure au seuil règlementaire.

L'unité U est maintenue en fonctionnement tant que le capteur Z mesure une teneur en ammoniac dans le flux 18 supérieure au seuil de 10 ppm. L'unité U fonctionne environ 4 à 5 heures. Dès que le capteur Z mesure une teneur en ammoniac dans le flux 18 inférieure au seuil de 10 ppm, on arrête le fonctionnement de l'unité U et on envoie l'intégralité du flux 18 directement à la cheminée CH ou moyen de la vanne V et le conduit 40.

## Revendications

1. Procédé de captage de CO₂ contenu dans les fumées de combustion (1) produites par une unité de combustion, dans lequel on effectue les étapes suivantes :
a) on met en contact les fumées de combustion (1) avec une solution absorbante (12) comportant au moins une amine en solution aqueuse de manière à obtenir des fumées appauvries en CO₂ et comportant des produits de dégradation de l'amine (32), et une solution absorbante enrichie en CO₂ (3),
b) on régénère au moins une fraction de la solution absorbante enrichie en CO₂ (3) dans une colonne de régénération (G) munie d'un rebouilleur (J) de manière à obtenir une solution absorbante régénérée (6) et un effluent gazeux riche en CO₂ (22), la solution absorbante régénérée (6) étant recyclée à l'étape a) en tant que solution absorbante (12),
c) on lave dans une première section de lavage (B3) les fumées appauvries en CO₂ obtenues à l'étape a) (32) par mise en contact avec un premier flux d'eau liquide (17), pour obtenir des fumées appauvries en produits de dégradation de l'amine (18) et un flux d'eau enrichi en produits de dégradation de l'amine (13),
le procédé comprenant en outre qu'on mesure (W, X, Y) au cours du temps au moins la valeur de l'un des paramètres de fonctionnement dudit procédé susceptible d'augmenter l'entrainement des produits de dégradation de l'amine dans les fumées appauvries en produits de dégradation de l'amine (18) obtenues à l'étape c),
qu'on libère (CH) les fumées appauvries en produits de dégradation de l'amine obtenues à l'étape c) (18) dans l'atmosphère tant que ladite valeur est constante,
et que, si on détecte une variation au cours du temps de ladite valeur, on effectue l'étape d) suivante :
d) on lave dans une deuxième section de lavage (B5) au moins une partie des fumées appauvries en produits de dégradation de l'amine obtenues à l'étape c) (18) par mise en contact avec un deuxième flux d'eau liquide (34) comportant au moins un acide dont le pKa est inférieur à 6, pour obtenir un gaz traité, puis on libère (CH) ledit gaz traité dans l'atmosphère.

2. Procédé selon la revendication 1, **caractérisé en ce que** lesdits paramètres de fonctionnement sont choisis parmi : la teneur en CO₂ dans les fumées de combustion avant l'étape a), la température des fumées de combustion avant l'étape a), le débit des fumées de combustion avant l'étape a), la valeur de la puissance au rebouilleur divisée par le débit de la solution absorbante à l'étape a).

3. Procédé selon l'une des revendications 1 et 2, **caractérisé en ce qu'**on effectue l'étape d), en outre, en cas de modification de l'alimentation en combustible de l'unité de combustion ou en cas de modification du taux de captage de CO₂ à l'étape a).

4. Procédé selon l'une des revendications 1 à 3, **caractérisé en ce qu'**on effectue l'étape d) si on détecte une variation d'au moins 2% de ladite valeur en moins d'une heure.

5. Procédé selon l'une des revendications précédentes, **caractérisé en ce qu'**on mesure (Z) au cours du temps la teneur en ammoniac contenue dans les fumées appauvries en produits de dégradation de l'amine obtenues à l'étape c) (18) et **en ce qu'**on arrête d'effectuer l'étape d) lorsque ladite teneur descend en-dessous d'un seuil prédéterminé.

6. Procédé selon l'une des revendications précédentes, **caractérisé en ce que** si on détecte une variation au cours du temps de ladite valeur, on effectue l'étape d) pendant au moins une période de temps déterminée.

7. Procédé selon l'une des revendications 1 à 6, dans lequel l'acide utilisé à l'étape d) est un acide inorganique choisi parmi le HNO₃, le HNO₂, le H₂SO₄, le H₂PO₃ et le H₃PO₄.

8. Procédé selon l'une des revendications 1 à 6, dans lequel l'acide utilisé à l'étape d) est un acide organique choisi parmi l'acide citrique, l'acide oxalique, l'acide malonique, l'acide succinique, l'acide malique, l'acide tartrique ou l'acide ortho-phtalique.

9. Procédé selon l'une des revendications 1 à 8, dans lequel on refroidit et on recycle une partie du flux d'eau enrichie en amine et en produits de dégradation de l'amine obtenu en fond de la première section de lavage pour constituer au moins une partie dudit premier flux d'eau liquide mis en oeuvre à l'étape c).

10. Procédé selon l'une des revendications précédentes, dans lequel on refroidit et on recycle une partie du flux d'eau obtenu en fond de la deuxième section de lavage pour constituer au moins une partie dudit flux d'eau liquide mis en oeuvre à l'étape d).

11. Procédé selon l'une des revendications précédentes, **caractérisé en ce qu'**on effectue l'étape suivante :
e) on liquéfie partiellement par refroidissement (N) ledit effluent gazeux obtenu à l'étape b) (22) pour obtenir un flux de CO₂ (24) et un condensat (23), et on met en contact une portion du condensat (45) avec le deuxième flux d'eau (34).

12. Procédé selon la revendication 11, **caractérisé en ce qu'**on effectue l'étape e) pendant une durée déterminée, lorsque ladite valeur est constante.

## Patentansprüche

1. Verfahren zum Einfangen von CO₂, das in den Verbrennungsgasen (1), die von einer Verbrennungseinheit produziert werden, enthalten ist, bei dem die folgenden Schritte ausgeführt werden:
a) die Verbrennungsgase (1) werden mit einer absorbierenden Lösung (12), aufweisend mindestens ein Amin in wässeriger Lösung in Kontakt gebracht, um an CO₂ abgereicherte Rauchgase aufweisend Abbauprodukte des Amins (32), und eine mit CO₂ angereicherte absorbierende Lösung (3) zu erhalten,
b) mindestens ein Teil der mit CO₂ angereicherten absorbierenden Lösung (3) wird in einer Regeneriersäule (G), die mit einem Verdampfer (J) versehen ist, regeneriert, um eine regenerierte absorbierende Lösung (6) und einen CO₂ reichen gasförmigen Abfluss (22) zu erhalten, wobei die regenerierte absorbierende Lösung (6) in Schritt a) als absorbierende Lösung (12) rezykliert wird,
c) in einem ersten Waschabschnitt (B3) werden die an CO₂ abgereicherten Rauchgase, die in Schritt a) (32) erhalten wurden, durch Kontaktierung mit einem ersten Strom von flüssigem Wasser (17) gewaschen, um Rauchgase, die arm an Abbauprodukten des Amins (18) sind zu erhalten, und einen Wasserstrom, der reich an Abbauprodukten des Amins (13) ist,
wobei das Verfahren ferner das Messen (W, X, Y) mindestens des Wertes eines der Funktionsparameter des Verfahrens über die Zeit umfasst, der geeignet ist, die Mitnahme der Abbauprodukte des Amins in den an Abbauprodukten des Amins (18) armen Rauchgasen, die in Schritt c) erhalten wurden, zu erhöhen,
die Freisetzung (CH) der an Abbauprodukten des Amins armen Rauchgase (18), die in Schritt c) erhalten wurden, in die Atmosphäre umfasst, solange der Wert konstant ist,
und die Durchführung des folgenden Schrittes d) umfasst, wenn mit der Zeit eine Veränderung des Wertes erfasst wird:
d) in einem zweiten Waschabschnitt (B5) wird mindestens ein Teil der an Abbauprodukten des Amins armen Rauchgase (18), die in Schritt c) erhalten wurden, durch Kontaktierung mit einem Strom von flüssigem Wasser (34) gewaschen, umfassend mindestens eine Säure, deren pKa geringer als 6 ist, um ein behandeltes Gas zu erhalten, welches anschließend in die Atmosphäre freigesetzt (CH) wird.

2. Verfahren nach Anspruch 1, **dadurch gekennzeichnet, dass** die Funktionsparameter ausgewählt werden unter: dem CO₂-Gehalt in den Verbrennungsgasen vor dem Schritt a), der Temperatur der Verbrennungsgase vor dem Schritt a), der Menge an Verbrennungsgasen vor dem Schritt a), dem Wert der Leistung am Verdampfer, geteilt durch die Menge der absorbierenden Lösung in Schritt a).

3. Verfahren nach einem der Ansprüche 1 und 2, **dadurch gekennzeichnet, dass** der Schritt d) ferner im Falle einer Veränderung der Brennstoffversorgung der Verbrennungseinheit oder im Falle einer Änderung der CO₂-Erfassungsrate in Schritt a) durchgeführt wird.

4. Verfahren nach einem der Ansprüche 1 bis 3, **dadurch gekennzeichnet, dass** der Schritt d) durchgeführt wird, wenn eine Veränderung von mindestens 2% des Wertes in weniger als einer Stunde erfasst wird.

5. Verfahren nach einem der vorhergehenden Ansprüche, **dadurch gekennzeichnet, dass** mit der Zeit der Gehalt an Ammoniak, das in den an Abbauprodukten des Amins armen Rauchgasen (18), die in Schritt c) erhalten wurden, enthalten ist, gemessen wird (Z), und dass die Durchführung des Schrittes c) angehalten wird, wenn der Wert unter eine vorbestimmte Schwelle sinkt.

6. Verfahren nach einem der vorhergehenden Ansprüche, **dadurch gekennzeichnet, dass**, wenn eine Änderung des Wertes mit der Zeit erfasst wird, der Schritt d) während mindestens eines vorbestimmten Zeitraums durchgeführt wird.

7. Verfahren nach einem der Ansprüche 1 bis 6, bei dem die in Schritt d) verwendete Säure eine anorganische Säure ist, die unter HNO₃, HNO₂, H₂SO₄, H₂PO₃ und H₃PO₄ ausgewählt wird.

8. Verfahren nach einem der Ansprüche 1 bis 6, bei dem die in Schritt d) verwendete Säure eine organische Säure ist, die unter der Zitronensäure, Oxalsäure, Malonsäure, Bernsteinsäure, Apfelsäure, Weinsäure oder der Ortho-Phthalsäure ausgewählt wird.

9. Verfahren nach einem der Ansprüche 1 bis 8, bei dem ein Teil des Wasserstroms, der mit Amin und Abbauprodukten des Amins angereichert ist und am Boden des ersten Waschabschnitts erhalten wird, gekühlt wird, um mindestens einen Teil des ersten Flüssigwasserstroms, der in Schritt c) eingesetzt wird, zu bilden.

10. Verfahren nach einem der vorhergehenden Ansprüche, bei dem ein Teil des Wasserstroms, der am Boden des zweiten Waschabschnitts erhalten wurde, gekühlt und rezykliert wird, um mindestens einen Teil des in Schritt d) eingesetzten Flüssigwasserstroms zu bilden.

11. Verfahren nach einem der vorhergehenden Ansprüche, **dadurch gekennzeichnet, dass** der folgende Schritt durchgeführt wird:
e) der in Schritt b) erhaltene gasförmige Abfluss (22) wird durch Kühlen (N) teilweise verflüssigt, um einen CO₂-Strom (24) und ein Kondensat (23) zu erhalten, und ein Teil des Kondensats (45) wird mit dem zweiten Wasserstrom (34) in Kontakt gebracht.

12. Verfahren nach Anspruch 11, **dadurch gekennzeichnet, dass** der Schritt e) während einer bestimmten Dauer durchgeführt wird, wenn der Wert konstant ist.

## Claims

1. A method of capturing the CO₂ contained in combustion fumes (1) produced by a combustion unit, wherein the following stages are carried out:
a) contacting combustion fumes (1) with an absorbent solution (12) comprising at least one amine in aqueous solution so as to obtain CO₂-depleted fumes comprising amine degradation products (32), and a CO₂-enriched absorbent solution (3),
b) regenerating at least a fraction of CO₂-enriched absorbent solution (3) in a regeneration column (G) provided with a reboiler (J) so as to obtain a regenerated absorbent solution (6) and a CO₂-rich gaseous effluent (22), regenerated absorbent solution (6) being recycled to stage a) as absorbent solution (12),
c) washing in a first wash section (B3) the CO₂-depleted fumes (32) obtained in stage a) by contacting with a first liquid water stream (17) so as to obtain fumes depleted in amine degradation products (18) and a water stream enriched in amine degradation products (13),
the method furthermore comprising measuring (W, X, Y) over time at least the value of one of the operating parameters of said method likely to cause increased entrainment of the amine degradation products in the fumes depleted in amine degradation products (18) obtained in stage c),
releasing (CH) to the atmosphere the fumes depleted in amine degradation products (18) obtained in stage c) as long as said value is constant,
and, if a variation over time of said value is detected, carrying out stage d) as follows:
d) washing in a second wash section (B5) at least part of the fumes depleted in amine degradation products (18) obtained in stage c) by contacting with a second liquid water stream (34) comprising at least one acid whose pKa value is below 6, so as to obtain a treated gas, and releasing (CH) said treated gas to the atmosphere.

2. A method as claimed in claim 1, **characterized in that** said operating parameters are selected from among: the CO₂ content of the combustion fumes prior to stage a), the temperature of the combustion fumes prior to stage a), the flow rate of the combustion fumes prior to stage a), the value of the reboiler power divided by the flow rate of the absorbent solution in stage a).

3. A method as claimed in any one of claims 1 and 2, **characterized in that** stage d) is furthermore carried out in case of change in the fuel supply to the combustion unit or in case of change in the CO₂ capture rate in stage a).

4. A method as claimed in any one of claims 1 to 3, **characterized in that** stage d) is carried out if a variation of at least 2 % of said value in less than one hour is detected.

5. A method as claimed in any one of the previous claims, **characterized in that** the ammonia content of the fumes depleted in amine degradation products (18) obtained in stage c) is measured (Z) over time and stage d) is stopped when said content falls below a predetermined threshold.

6. A method as claimed in any one of the previous claims, **characterized in that**, if a variation over time of said value is detected, stage d) is carried out for at least a predetermined period of time.

7. A method as claimed in any one of claims 1 to 6, wherein the acid used in stage d) is an inorganic acid selected from among HNO₃, HNO₂, H₂SO₄, H₂PO₃ and H₃PO₄.

8. A method as claimed in any one of claims 1 to 6, wherein the acid used in stage d) is an organic acid selected from among citric acid, oxalic acid, malonic acid, succinic acid, malic acid, tartric acid or orthophthalic acid.

9. A method as claimed in any one of claims 1 to 8, wherein part of the water stream enriched in amine and in amine degradation products obtained in the bottom of the first wash section is cooled and recycled so as to make up at least part of said first liquid water stream used in stage c).

10. A method as claimed in any one of the previous claims, wherein part of the water stream obtained in the bottom of the second wash section is cooled and recycled so as to make up at least part of said liquid water stream used in stage d).

11. A method as claimed in any one of the previous claims, **characterized in that** the following stage is carried out:
e) partly liquefying by cooling (N) said gaseous effluent (22) obtained in stage b) so as to obtain a CO₂ stream (24) and a condensate (23), and contacting a portion (45) of the condensate with second water stream (34).

12. A method as claimed in claim 11, **characterized in that** stage e) is carried out for a predetermined time when said value is constant.
